**Europäisches Patentamt**

(19) **European Patent Office**

**Office européen des brevets**

(11) Publication number: **0 117 917**

**A2**

(12) # EUROPEAN PATENT APPLICATION

(21) Application number: **83112528.1**

(22) Date of filing: **13.12.83**

(51) Int. Cl.³: **B 29 C 1/14**

(30) Priority: **14.12.82 IT 2474782**

(43) Date of publication of application:
**12.09.84 Bulletin 84/37**

(84) Designated Contracting States:
**AT CH DE FR GB LI NL SE**

(71) Applicant: **SPRAY PLAST S.p.A.**
**Via Belfiore, 3**
**I-36060 Romano d'Ezzelino (Vicenza)(IT)**

(72) Inventor: **Parise, Bernardino**
**Via Mantegna 6**
**I-36063 Marostica (Vicenza)(IT)**

(74) Representative: **Dr. Ing. A. Racheli & C.**
**Viale San Michele del Carso, 4**
**I-20144 Milano(IT)**

(54) **Process and mould for producing plastics articles provided with at least one sharp-edged surface partly projecting into a cavity.**

(57) This invention relates to a process to provide at least one sharp edge projecting surface in a cavity accessible from only one end. According to the process, as the two female half-dies (10a, 10b) are moved near each other and then simultaneously, as well known, the main forming pin (16) is handled for positioning within the cavity provided inside said female half-dies (10a, 10b), provision is made for sealingly locating at least one projecting element (14) integral with at least one of said female half-dies (10a, 10b) against the main forming pin (16), so as to define in proximity of said projection at least two separate zones (20a, 20b) which will then accommodate the plastics material. Then, the plastics material is suitably allowed to cool down and, finally the two female half-dies (10a, 10b) are separated while at the same time, as well known, the removal of said forming pin (16) is caused, without causing any further deformations to the sharp edge projection surface thus obtained.

FIG.2

# TITLE MODIFIED
### see front page

Applicant:

SPRAY PLAST S.p.A.

Via Belfiore, 3

IT - 36060 ROMANO D'EZZELINO (Vicenza)

"A PROCESS AND MOLDING UNIT FOR PLASTICS MATERIAL TO PROVIDE AT LEAST ONE SHARP EDGE PARTLY PROJECTION SURFACE IN A CAVITY ACCESSIBLE FROM ONLY ONE END"

This invention relates to a process and associated molding unit for plastics material to provide at least one sharp edge partly projecting surface in a cavity accessible from only one end.

At present, within cavities of any shape, as accessible from only one end, that is closed throughout the entire side surface, sharp edge surfaces cannot be provided by using a known molding unit, comprising the female die and a known type of forming pin. Thus, the drawing of the forming pin, once the plastics material has been injected and suitably treated would, unless using suitable and costly treatments, "tear" the sharpened edge or anyhow modify the shape thereof. Accordingly, it clearly appears that the inner projecting surface, as normally provided by snap engagement with other components, is not correctly shaped, and therefore the engagement is poorly reliable.

Therefore, it is the object of the present invention to provide a process of simple realization, not involving any particularly hard-working steps or expensive modifications to the normally used molding unit, but enabling to obtain an internally projecting sharp edge to provide said snap engagement.

The object is achieved by providing a process according to which, as the two female half-dies are moved near each other, and then at the same time, as well known, the main forming pin is handled for positioning within the cavity inside the female half-dies, the sealing positioning is provided for at least one projecting element, integral with at least one of said female half-dies against the main forming pin, thereby to define in proximity of said projections at least two separate zones in which the plastics material is injected, which material is then suitably treated, such as by allowing it to cool down, and finally the two female half-dies are separated and at the same time, as well known, the extraction or drawing of the forming pin from the cavity thus provided is caused.

The molding unit for carrying out the process comprises a female die provided with at least one element projecting into the cavity in which a main forming pin is inserted. Said main forming pin is provided with at least one zone on its side surface for sealingly bearing against said projecting element on the female die, thereby to create in the proximity of said projection two separate zones

to accomodate and mold the plastics material and comprising at least one opening for the injection of the plastics material in the zones between said female die and forming pin.

A particular embodiment provides that said forming pin has in said contacting zone at least one substantially re-entering seat continuing with a substantially frusto-conical portion, the latter slightly increasing in the direction to the insertion end.

Another solution provides that the forming pin is fitted with at least one abutment surface or successive abatements with decreasing diameter to the insertion end of said forming pin, thereby to create a decreasing surface to provide also a plurality of step surfaces arranged within the cavity.

A particular embodiment of said process and obtained product will now be shown with reference to the accompanying drawings, in which:

Fig. 1 is a view showing an embodiment for a molding unit already set to position;

Fig. 2 is a view of the molding unit according to the invention as seen at 90° with respect to the position in Fig. 1;

Fig. 3 is a sectional view taken from the position in Fig. 2;

Fig. 4 is a perspective view showing an exemplary embodiment of the forming pin; and

Fig. 5 shows a detail of an embodiment for a sharp edge within a cavity obtained by the process and molding unit according to the invention.

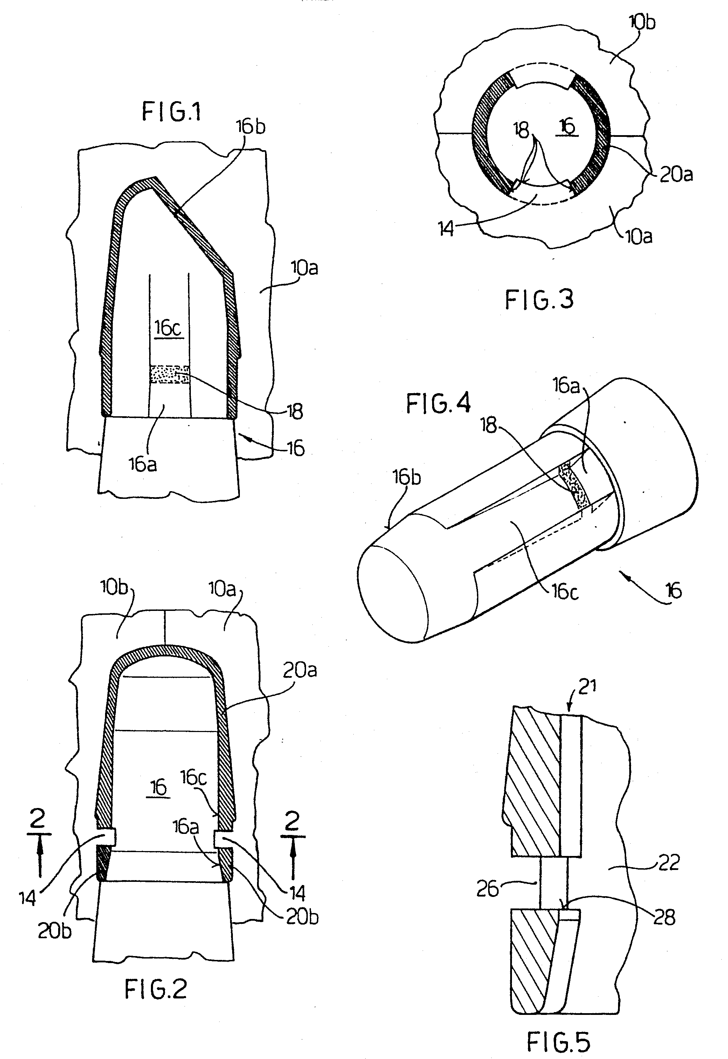

Figs. 1 to 3 are views showing some main elements making up the molding unit according to the invention. Reference numeral 10a denotes the half-element of the female die, which is closed by a similar element 10b. Integral therewith both of said female half-dies have two projecting elements 14 (Fig. 2) at the cavities in which the forming pin is inserted. Reference numeral 16 denotes the main forming pin for insertion within the suitably spaced apart female die, thereby to create the cavity within the element to be provided. In this embodiment, the means define a substantially cylindrical or frusto-conical inner cavity, but by changes of obvious nature to those skilled in the art expedients may be provided in order that the cavities be variously shaped. At the projecting elements 14 said forming pin 16 has a highly tapered surface 16a which continues and then blends to the end 16b with a slight taper.

Fig. 3 particularly shows the forming pin 16 and the sealing zone 18 for the projecting elements 14. In this Figure, the engagement position is shown with the projecting elements 14 bearing against said tight sealing zone 18. Thus, it is desired that, when the hot plastics material is injected, the material is evenly distributed in the spaces as left between the female die, respectively indicated at 20a and 20b (Figs. 1 and 2), the projecting elements 14 and the forming pin 16.

The process for the use of said molding unit is explained in the following.

The two female half-dies 10a and 10b are approached simultaneously moving, as well known, the insertion carriage for the forming pin 16. Depending on the structure of the die, said pin 16 will arrive at its final position within the cavity when the two half-dies are completely moved near each other. At the final position, the unit provides that the projecting elements 14 will sealingly bear in the zone 18, as shown in Fig. 2, which is a view rotated by 90° with respect to the view in Fig. 1. Thus, the projecting elements 14 are shown in contact with the sealing zone 18 of the forming pin 16, thereby to develope a tight sealing engagement. Then, through openings, not shown, the plastics material is injected at injection temperature. Therefore, the plastics material is distributed in the space 20a and 20b, respectively. It will be particularly appreciated that, with reference to the zone or space 20a, a sharp edge is provided as created by the engagement between the projecting element 14 and the zone 18 of the forming pin 16. Then, the material is allowed to cool down or is anyhow suitably treated. When the material is solidified, the two female half-dies 10a and 10b are moved away from each other, at the same time causing the extraction or drawing of the forming pin 16.

For example, said forming pin may be made of slightly frusto-conical shape at the portion 16c, so as to promote the extraction or drawing thereof without "tearing" the sharp edge thus obtained, or may be of cylindrical shape. In this latter case, the pin surface should be suitably treated. However, it may be of any taper. A taper of about 30' is provided in a solution.

The edge thus obtained in a device is shown by a particular example in Fig. 5. This Figure shows the inner cavity 22 of the element 21 which is provided with an opening 26, the latter being produced by the projecting element 14 positioned at forming step. Reference numeral 28 denotes the sharp edge thus obtained. Of course, this sharp edge would extend for a length of the inner surface at the opening 26. Thus, by this embodiment arcs of sharp edge projecting surfaces are obtained.

It will be appreciated that by this easy process and molding unit edges having fully sharpened ends can be obtained internally of cavities accessible from one side only, which edges are particularly useful for snap engagement with further possible components. Alternatively, the forming pin 16 may be provided as fitted with an abatement or successive abatements longitudinally arranged on the side surface. Therefore, at forming step, a plurality of projecting elements 14 are arranged at said abatements, thereby creating concentric sharp edge surfaces.

As above pointed out, the inner cavity may be of any shape. Preferably, it is of cylindrical shape as it would avoid any preferential orientation in case of insertion of an element to be snap coupled with the internally provided sharp edge surface.

- 7 -

**0117917**

SPRAY PLAST S.p.A.

IT - 36060 ROMANO D'EZZELINO (Vicenza)

C L A I M S

1.    A process for providing in a cavity accessible from only one end at least one projecting sharp edge surface, characterized in that, as the two female half-dies (10a, 10b) are moved near each other and accordingly at the same time the main forming pin (16) is handled for positioning thereof within the cavity inside said female half-dies (10a, 10b), leaving a zone for injection of the plastics material, the sealing positioning is provided for at least one projecting element (14) integral with the female half-dies (10a, 10b) against the main forming pin (16), thereby to define at least two separate zones (20a, 20b) in the proximity of said projecting element in which the plastics material is then injected, then the material is suitably allowed to cool down and finally the two female half-dies (10a, 10b) are separated, while at the same time, as well known, the extraction or drawing of said forming pin (16) is caused.

2.    A molding unit for carrying out the process as claimed in Claim 1, characterized by comprising a female die composed of two half-elements (10a, 10b) integrally carrying at least one projecting element (14) arranged in the cavity defined by said female dies, in which a main forming pin (16) is inserted, said forming pin being provided with at least one zone on the side surface for sealing engagement with said projecting element (14) arranged on at least one female half-die (10ª, 10b), thereby to define in the proximity of said projecting element (14) two separate zones to accomodate and mold the plastics material, and being also provided at least one opening for the injection of the plastics material in the spaces between the femal die and forming pin.

3. A molding unit as claimed in Claim 2, characterized in that said main forming pin (16) has in said sealing zone with at least one of said projecting elements (14) integral with one of the female half-dies (10a, 10b) a zone having a partially re-entering surface (16a) continuing with a substantially frusto-conical portion (16c) slightly increasing to the end (16b).

4. A molding unit as claimed in Claim 2, characterized in that said projecting elements (14) integral with at least one female half-die (10a, 10b) have sealing engagement surfaces with zones in the main forming pin (16), thereby to enable the diffusion of the plastics material injected in the cavities, without spreading in the zone where the side projecting element (14) sealingly engages with said forming pin (16).

5. A molding unit as claimed in Claim 2, characterized in that said forming pin (16) has at least one abatement or highly tapered surface to the end (16b), thereby to create a decreasing surface, against which a plurality of projecting elements from said female half-dies abut.

6.       A molding unit as claimed in Claim 5, characterized in that said forming pin has a plurality of successive abatements.

FIG.1

FIG.2

FIG.3

FIG.4

FIG.5